# EUROPEAN PATENT SPECIFICATION

(11) **EP 3 428 820 B1**
(45) Date of publication and mention of the grant of the patent: **24.11.2021**
(21) Application number: 16895914.6
(22) Date of filing: 30.03.2016
(51) Int. Cl.: G06F 21/32

(54) **TERMINAL VOICE UNLOCKING METHOD AND TERMINAL**
VERFAHREN ZUR ENTSPERRUNG EINES ENDGERÄTS ÜBER SPRACHE UND ENDGERÄT
PROCÉDÉ DE DÉVERROUILLAGE VOCAL DE TERMINAL ET TERMINAL

(43) Date of publication of application: 16.01.2019
(73) Proprietor: Huawei Technologies Co., Ltd., Longgang District Shenzhen, Guangdong 518129 (CN)
(72) Inventor: XU, Yunfei, Shenzhen Guangdong 518129 (CN); JIANG, Kaiyu, Shenzhen Guangdong 518129 (CN); TIAN, Lisheng, Shenzhen Guangdong 518129 (CN)
(74) Representative: Thun, Clemens
(86) International application number: PCT/CN2016/077892
(87) International publication number: WO 2017/166133

(56) References cited:
- CN-A- 103 729 584
- CN-A- 104 537 291
- CN-A- 104 658 533
- CN-A- 104 821 934
- CN-A- 105 323 238
- US-A1- 2005 089 172
- US-A1- 2013 097 682
- US-B2- 9 009 630

## Description

### TECHNICAL FIELD

The present invention relates to the field of voice unlocking for a terminal, and in particular, to a voice unlocking method for a terminal and a terminal.

### BACKGROUND

With rapid popularization of smartphones, a human-machine interaction technology has been widely applied to various fields, and voice interaction between a human and a machine becomes more common. Typical applications include Siri, a voice assistant, and the like. A voice unlocking technology appears accordingly, that is, a machine determines a received voice, to determine whether to perform unlocking.

A current voice unlocking technology is mainly to extract a voiceprint from received voice information, to further determine whether the voiceprint is the same as a voiceprint model trained by a user in advance, and to perform unlocking when the voiceprint is the same as the voiceprint model.

However, voiceprint uniqueness is still not found, that is, different persons may have a same voiceprint. Therefore, a current voice unlocking solution is not of high accuracy, and can be used only in a scenario with low security performance requirement.

CN 104821934 A refers to an artificial intelligence based voice print login method. The method comprises a first step of receiving a login request from a user, and acquiring user information of the user; a second step of generating a login character string, and replacing contrast information so as to replace at least one character in the login character string according to the character corresponding to the user information; a third step of providing the login character string with at least one character replaced for the user, and receiving voice information about reading of the login character string by the user; and a fourth step of performing login verification on the user according to the voice information about reading of the login characteristic string by the user.

US 2005/0089172 A1 refers to a vocal print authentication system including voice recording means for recording vocal print data of single elements of numbers and/or letters which constitute a password and vocal print data of link elements which links the respective single elements for every registrant, password forming means for forming a random password using the respective elements, vocal data forming means for forming vocal data of the password which is formed by the password forming means using the vocal print data, and password determination means for determining whether a determination requesting person is the registrant or not based on the collation between vocal data which is obtained due to the inputting by voice of the password by the determination requesting person and the vocal data which is formed by the vocal data forming means.

US 2013/009782 A1 refers to a pre-registration procedure to create a user profile for a user of a multi-factor authentication ("MFA") service. A client application installation procedure is utilized to install a client application on a computing device that is to be utilized as an authentication factor for the MFA service. A computing device enrollment procedure is utilized to enroll the computing device on which the client application was installed for the MFA service. A voice enrollment procedure is utilized to create a voice print for the user of the computing device that is to be utilized as an authentication factor for the MFA service. An authentication procedure is utilized to provide multi-factor authenticated access to a service, such as an online service that provides access to sensitive account information.

### SUMMARY

Embodiments of the present invention provide a voice unlocking method for a terminal and a terminal, to improve accuracy and security of a voice unlocking solution.

This problem is solved by the subject matter of the independent claims. Further implementation forms are provided in the dependent claims.

Embodiments labelled as inventive embodiments in the following, which are not covered by the scope of protection afforded by the independent claims, are to be understood as examples helpful for understanding the invention, but not as embodiments of the invention.

To achieve the foregoing objective, the following technical solutions are used in the embodiments of the present invention:

According to a first aspect, a voice unlocking method for a terminal is disclosed, including:
First, a string of text characters is randomly displayed on a lock screen of the terminal. The text characters include a first-type character and a second-type character, the second-type character is used to indicate a location of a to-be-entered password character in the text characters, and the first-type character and the to-be-entered password character form a password character string used for unlocking the terminal. The first-type character herein may be a digit, a letter, or the like, and the second-type character may be "_", "^{∗}", or the like, to indicate that a password needs to be filled in a location corresponding to the second-type character during voice unlocking. In addition, the "fill" herein does not mean manual entering by a user, but that the user needs to fill in the password by means of sound production when reading an unlocking character string. For example, the terminal displays "23_8_9_0", that is, to instruct the user to fill passwords in three locations: between 3 and 8, between 8 and 9, and between 9 and 0. If passwords filled by the user are abc, the user reads "23a8b9c0". In addition, the to-be-entered password character is a password preset by the user. If a text password preset by a real user of the terminal, that is, the to-be-entered password, is 269, the password character string is "23286990". That is, a location of the to-be-entered password character in the password character string is the same as a location of the second-type character in the text characters.

Then, the terminal receives voice information, and recognizes an unlocking character string from the voice information. That is, the first-type character and the password filled in the location of the second-type character that are successively read by the user are recorded. Therefore, the unlocking character string read by the user can be parsed. Certainly, because the user reads the first-type character according to a sequence of the text characters displayed on an unlock screen of the terminal, and fills the password in the location of the second-type character by using a voice, the voice information also indicates a relative sequence between the first-type character and the password that is entered by the user by using a voice.

Further, the terminal determines whether the unlocking character string matches the password character string. The first-type character randomly displayed by the terminal may be the same as or different from the to-be-entered password character.

If the unlocking character string matches the password character string, the terminal parses the voice information, to obtain a voiceprint in the voice information.

The terminal determines whether the voice information is the same as a preset voiceprint.

If the voiceprint in the voice information is the same as the preset voiceprint, the terminal is unlocked.

In existing voice unlocking, an unlocking text is randomly displayed, then an unlocking voice read by the user is received, the unlocking voice is analyzed to obtain a voiceprint, and a terminal is unlocked if the voiceprint is the same as a pre-extracted voiceprint model. However, a voiceprint extracted by using a current technology is not a uniqueness characteristic of a sound, and different persons may have a same voiceprint. Therefore, a current voice unlocking solution is not of high accuracy. Alternatively, the unlocking text is fixed, and a password is easily stolen when the user of the terminal reads the unlocking text to perform unlocking by using a voice. Consequently, security is reduced.

According to the voice unlocking method for a terminal provided in the present invention, the text characters including the first-type character and the second-type character are randomly displayed, and the second-type character is used to indicate a location of the to-be-entered password. The user needs to fill the password in the location of the second-type character during reading, and the terminal parses the voice information entered by the user, to obtain the unlocking character string, and can be unlocked only when the unlocking character string matches the password character string and voiceprint recognition of the voice information succeeds. The text password and the voiceprint recognition are combined, so that a problem of low unlocking accuracy caused by voiceprint non-uniqueness is avoided, and voice unlocking accuracy can be improved. In addition, because the second-type character in which the password needs to be filled is in an unfixed location in the text characters displayed on the unlock screen, the password is not easily stolen, and voice unlocking security is improved.

With reference to the first aspect, in a first possible implementation of the first aspect, before the displaying a string of random text characters on a lock screen of the terminal, the method further includes:
forming, by the terminal, the password character string according to the first-type character string and the to-be-entered password. The to-be-entered password herein is a text password preset by the user, and the location of the to-be-entered password is the same as the location of the second-type character. In specific implementation, the terminal randomly generates the first-type character, for example, "23890", and randomly inserts the to-be-entered password abc into the first-type character to generate a password character string such as "23a8b9c0". In addition, if the second-type character is "_", the text character randomly displayed by the terminal maybe "23_8_9_0".

With reference to the first aspect or the first possible implementation of the first aspect, in a second possible implementation of the first aspect, before the displaying a string of random text characters on a lock screen of the terminal, the method further includes:
receiving, by the terminal, a setting instruction, and generating a preset character set;
displaying, by the terminal, a training character string, where the training character string includes all characters in the preset character set;
receiving, by the terminal, training voice information, where the training voice information is used for instructing a user to read the training character string; and
parsing, by the terminal, the training voice information, to obtain the preset voiceprint.

Herein, the real user of the terminal pre-reads repeatedly (for example, reads at least three times) all the characters in the preset character set displayed by the terminal. The terminal collects a voice of the user, parses the voice, and can obtain the preset voiceprint, that is, a voiceprint of the real user of the terminal.

With reference to the first aspect, or the first or the second possible implementation of the first aspect, in a third possible implementation of the first aspect, the determining, by the terminal, whether the unlocking character string matches the password character string specifically includes:
determining whether characters included in the unlocking character string are the same as characters included in the password character string;
if the characters included in the unlocking character string are the same as the characters included in the password character string, determining whether a location of each character in the unlocking character string is the same as a location of each character in the password character string; and
if the location of each character in the unlocking character string is the same as the location of each character in the password character string, determining that the unlocking character string matches the password character string.

That is, the unlocking character string extracted from the voice read by the user needs to be in a one-to-one correspondence with the characters included in the preset password character string, so that it can be considered that the password character filled by the user matches the preset password character string. For example, the preset password character string is 1268, and only when the unlocking character string read by the user are 1268, it can be determined that the unlocking character string matches the password character string. If the unlocking character string read by the user is 8621 or 2681, it cannot be considered that the unlocking character string matches the password character string.

With reference to the first aspect, in a fourth possible implementation of the first aspect, if the unlocking character string does not match the password character string, the terminal indicates that unlocking fails.

With reference to the first aspect, in a fifth possible implementation of the first aspect, if the terminal determines that the voiceprint in the voice information is different from the preset voiceprint, the terminal indicates that unlocking fails.

Specifically, a text "unlocking fails" may be displayed in a specific area of a screen of the terminal.

Certainly, after indicating that unlocking fails, the terminal may further randomly display an unlocking character string again.

With reference to the second to the fifth possible implementations of the first aspect, in a sixth possible implementation of the first aspect, the first-type character belongs to the preset character set, and the second-type character does not belong to the preset character set.

With reference to the first aspect, in a seventh possible implementation of the first aspect, before the randomly displaying a string of text characters on a lock screen of the terminal, the method further includes:
entering, by the terminal, a locked state, and receiving, by the terminal, an unlock instruction.

Any button of the terminal may be pressed, or a specific button (for example, a power button and a lock screen button) may be pressed.

With reference to the first aspect or the first to the third possible implementations of the first aspect, in an eighth possible implementation of the first aspect, after the randomly displaying a string of text characters on a lock screen of the terminal, the method further includes:
instructing the user to enter the unlocking character string by using a voice.

In specific implementation, the user may be instructed, by using a voice, to read the first-type character displayed on the unlock screen and fill the password in the location of the second-type character, to enter the unlocking character string by using a voice. Certainly, a literal text may be displayed on the unlock screen to instruct the user to enter the unlocking character string by using a voice, for example, "read displayed digits and fill a password in a location where a digit is not shown" is displayed on the unlock screen.

According to a second aspect, a terminal is disclosed, including:
a display unit, configured to randomly display a string of text characters on a lock screen of the terminal, where the text characters include a first-type character and a second-type character, the second-type character is used to indicate a location of a to-be-entered password character in the text characters, and the first-type character and the to-be-entered password character form a password character string used for unlocking the terminal;
a receiving unit, configured to receive voice information;
a recognition unit, configured to recognize an unlocking character string from the voice information;
a determining unit, configured to determine whether the unlocking character string matches the password character string;
a parsing unit, configured to: when the unlocking character string matches the password character string, parse the voice information, to obtain a voiceprint in the voice information;
the determining unit is further configured to determine whether the voiceprint in the voice information is the same as a preset voiceprint; and
an unlocking unit, configured to unlock the terminal after the determining unit determines that the voiceprint in the voice information is the same as the preset voiceprint.

In existing voice unlocking, an unlocking text is randomly displayed, then an unlocking voice read by a user is received, the unlocking voice is analyzed to obtain a voiceprint, and a terminal is unlocked if the voiceprint is the same as a pre-extracted voiceprint model. However, a voiceprint extracted by using a current technology is not a uniqueness characteristic of a sound, and different persons may have a same voiceprint. Therefore, a current voice unlocking solution is not of high accuracy. Alternatively, the unlocking text is fixed, and a password is easily stolen when the user of the terminal reads the unlocking text to perform unlocking by using a voice. Consequently, security is reduced.

The terminal provided in the present invention randomly displays the text characters including the first-type character and the second-type character, and the second-type character is used to indicate a location of a to-be-entered password. The user needs to fill a password in a location of the second-type character during reading, and the terminal parses the voice information entered by the user, to obtain the unlocking character string, and can be unlocked only when the unlocking character string matches the password character string and voiceprint recognition of the voice information succeeds. The text password and the voiceprint recognition are combined, so that a problem of low unlocking accuracy caused by voiceprint non-uniqueness is avoided, and voice unlocking accuracy can be improved. In addition, because the second-type character in which the password needs to be filled is in an unfixed location in the text characters displayed on an unlock screen, the password is not easily stolen, and voice unlocking security is improved.

With reference to the second aspect, in a first possible implementation of the second aspect, the terminal further includes a first generation unit, where
the first generation unit is configured to generate the password character string according to the first-type character string and the to-be-entered password character before the display unit displays the string of random text characters on the lock screen of the terminal.

The to-be-entered password herein is a text password preset by the user, and the location of the to-be-entered password is the same as the location of the second-type character. In specific implementation, the terminal randomly generates the first-type character, for example, "23890", and randomly inserts the to-be-entered password abc into the first-type character to generate a password character string such as "23a8b9c0". In addition, if the second-type character is "_", the text character randomly displayed by the terminal maybe "23_8_9_0".

With reference to the second aspect or the first possible implementation of the second aspect, in a second possible implementation of the second aspect, the terminal further includes a second generation unit, where
the receiving unit is further configured to receive a setting instruction before the display unit displays the string of random text characters on the lock screen of the terminal;
the second generation unit is configured to generate a preset character set after the receiving unit receives the setting instruction;
the display unit is further configured to display a training character string, where the training character string includes all characters in the preset character set;
the receiving unit is further configured to receive training voice information, where the training voice information is used for instructing a user to read the training character string; and
the parsing unit is further configured to parse the training voice information, to obtain the preset voiceprint.

With reference to the second aspect, or the first or the second possible implementation of the second aspect, in a third possible implementation of the second aspect, the determining unit is specifically configured to:
determine whether characters included in the unlocking character string are the same as characters included in the password character string;
if the characters included in the unlocking character string are the same as the characters included in the password character string, determine whether a location of each character in the unlocking character string is the same as a location of each character in the password character string; and
if the location of each character in the unlocking character string is the same as the location of each character in the password character string, determine that the unlocking character string matches the password character string.

With reference to the second aspect, in a fourth possible implementation of the second aspect, the terminal further includes a prompt unit, where
the prompt unit is configured to: if the determining unit determines that the unlocking character string does not match the password character string, indicate that unlocking fails.

With reference to the second aspect, in a fifth possible implementation of the second aspect, the terminal further includes a prompt unit, where
the prompt unit is configured to: if the determining unit determines that the voiceprint in the voice information is different from the preset voiceprint, indicate that unlocking fails.

With reference to any one of the second to the fifth possible implementations of the second aspect, in a sixth possible implementation of the second aspect, the first-type character belongs to the preset character set, and the second-type character does not belong to the preset character set.

With reference to the second aspect, in a third possible implementation of the second aspect, the terminal further includes a locking unit, where
the locking unit is configured to: before the display unit displays the unlocking character string, control the terminal to enter a locked state; and
the receiving unit is further configured to receive an unlock instruction.

With reference to any one of the second aspect or the first to the third possible implementations of the second aspect, in an eighth possible implementation of the second aspect, the terminal further includes a prompt unit, where
the prompt unit is configured to: after the display unit randomly displays the string of text characters on the lock screen of the terminal, instruct the user to enter the unlocking character string by using a voice.

According to a third aspect, a terminal is disclosed, including:
a display panel, configured to randomly display a string of text characters on a lock screen of the terminal, where the text characters include a first-type character and a second-type character, the second-type character is used to indicate a location of a to-be-entered password character in the text characters, and the first-type character and the to-be-entered password character form a password character string used for unlocking the terminal;
a microphone, configured to receive voice information;
a memory, configured to store an instruction;
a processor, configured to invoke the instruction stored in the memory, so as to:
   recognize an unlocking character string from the voice information;
   determine whether the unlocking character string matches the password character string;
when the unlocking character string matches the password character string, parse the voice information, to obtain a voiceprint in the voice information;
determine whether the voiceprint in the voice information is the same as a preset voiceprint; and
unlock the terminal after it is determined that the voiceprint in the voice information is the same as the preset voiceprint.

With reference to the third aspect, in a first possible implementation of the third aspect, the processor is further configured to generate the password character string according to the first-type character string and the to-be-entered password character before the display panel displays the string of random text characters on the lock screen of the terminal.

With reference to the third aspect or the first possible implementation of the third aspect, in a second possible implementation of the third aspect, the processor is further configured to: receive a setting instruction before the display panel displays the string of random text characters on the lock screen of the terminal, and
generate a preset character set after receiving the setting instruction;
the display panel is further configured to display a training character string, where the training character string includes all characters in the preset character set;
the microphone is further configured to receive training voice information, where the training voice information is used for instructing a user to read the training character string; and
the processor is further configured to parse the training voice information, to obtain the preset voiceprint.

With reference to the third aspect or the first or the second possible implementation of the third aspect, in a third possible implementation of the second aspect, the processor is specifically configured to: determine whether characters included in the unlocking character string are the same as characters included in the password character string;
if the characters included in the unlocking character string are the same as the characters included in the password character string, determine whether a location of each character in the unlocking character string is the same as a location of each character in the password character string; and
if the location of each character in the unlocking character string is the same as the location of each character in the password character string, determine that the unlocking character string matches the password character string.

With reference to any one of the third aspect, or the first to the third possible implementations of the third aspect, in a fourth possible implementation of the second aspect, the terminal further includes a loudspeaker, where
the loudspeaker is configured to: after the display panel randomly displays the string of text characters on the lock screen of the terminal, instruct the user to enter the unlocking character string by using a voice; or
the display panel is configured to: after randomly displaying the string of text characters on the lock screen of the terminal, instruct the user to enter the unlocking character string by using a voice.

With reference to any one of the second to the fourth possible implementations of the third aspect, in a fifth possible implementation of the second aspect, the first-type character belongs to the preset character set, and the second-type character does not belong to the preset character set.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a structural block diagram of a terminal according to Embodiment 1 of the present invention;
FIG. 2 is a schematic diagram of a text character according to Embodiment 1 of the present invention;
FIG. 3 is a schematic diagram of a training character string according to Embodiment 1 of the present invention;
FIG. 4 is a schematic flowchart of an unlocking setting method according to Embodiment 2 of the present invention;
FIG. 5 is a schematic diagram of password setting according to Embodiment 2 of the present invention;
FIG. 6 is a schematic diagram of password confirmation according to Embodiment 2 of the present invention;
FIG. 7 is a schematic flowchart of a voice unlocking method for a terminal according to Embodiment 2 of the present invention;
FIG. 8 is a structural block diagram of a terminal according to Embodiment 3 of the present invention;
FIG. 9 is another structural block diagram of a terminal according to Embodiment 3 of the present invention;
FIG. 10 is another structural block diagram of a terminal according to Embodiment 3 of the present invention; and
FIG. 11 is still another structural block diagram of a terminal according to Embodiment 3 of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

An existing voice unlocking solution includes a training process and an authentication process. Specifically, the training process is as follows:
(1) A terminal randomly generates a text password, or a real user of a terminal specifies a text password.
(2) A user reads, for multiple times, the text password displayed by the terminal, and a machine performing recording.

The user herein is the real user of the terminal.

(3) The terminal parses the recording, to obtain a voiceprint model of the real user of the terminal.

In addition, the authentication process is as follows:
(1) The terminal displays the text password.
(2) A user reads the text password, and the terminal performs recording.

The user herein may be the real user of the terminal, or may be any user that wants to use the terminal.

(3) Perform voice recognition, that is, the terminal determines whether content said by the user is consistent with the text password. If the content said by the user is consistent with the text password, a next step is performed; or if the content said by the user is inconsistent with the text password, the authentication fails.

(4) Perform voiceprint recognition, that is, the terminal determines whether a recorded voiceprint is the same as the voiceprint model. If the recorded voiceprint is the same as the voiceprint model, the authentication succeeds; or if the recorded voiceprint is not same as the voiceprint model, the authentication fails.

Generally, there is a quite low probability that the user incorrectly reads the text password displayed by the terminal. It can be learned that security and accuracy of the existing voice unlocking solution greatly depend on the voiceprint recognition. Because voice duration is only several seconds, accuracy of the voiceprint recognition is quite low, and consequently, accuracy and security of the authentication process are relatively low.

A principle of the present invention is that a preset text password is not displayed in a voice unlocking process. A user needs to fill a password in a corresponding location during reading, and can perform unlocking only after filling in a correct password and passing voiceprint recognition. The text password and the voiceprint recognition are combined, so that a problem of low unlocking accuracy caused by voiceprint non-uniqueness is avoided, and voice unlocking accuracy can be improved. In addition, because a second-type character in which a password needs to be filled is in an unfixed location in a decoding character string, the password is not easily stolen, and voice unlocking security is improved.

### Embodiment 1

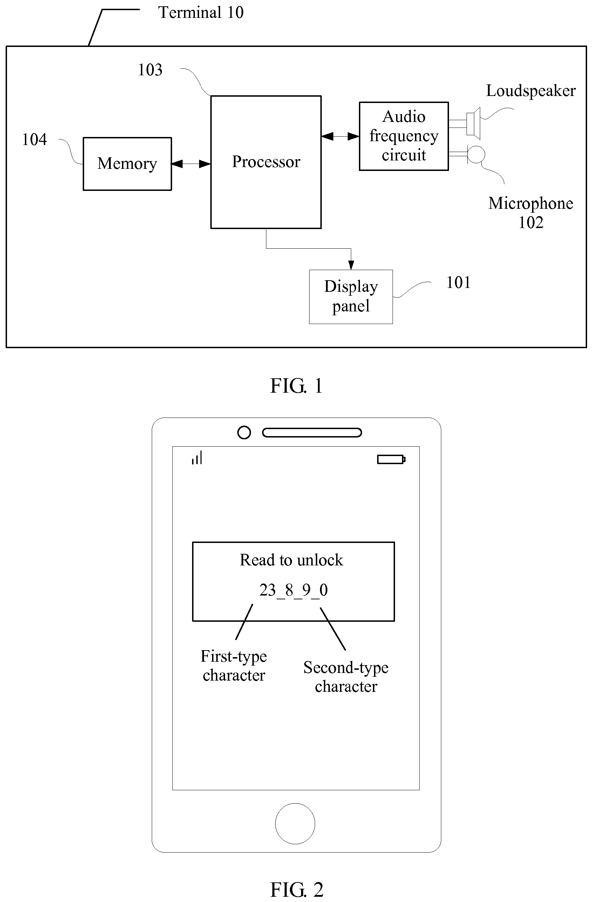

This embodiment of the present invention provides a terminal. As shown in FIG. 1, the terminal includes a display panel 101, a microphone 102, a processor 103, and a memory 104.

The display panel 101 is configured to randomly display a string of text characters on a lock screen of the terminal. The text characters include a first-type character and a second-type character, the second-type character is used to indicate a location of a to-be-entered password character in the text characters, and the first-type character and the to-be-entered password character form a password character string used for unlocking the terminal.

The first-type character herein may be a digit and/or a letter. The digit may be 0 to 9, and the letter may be an English letter, or may be a consonant, a vowel, or the like. This is not limited herein. The second-type character may be "_", "^{∗}", or the like, and is used to indicate that a password needs to be filled in a location corresponding to the second-type character during voice unlocking. The "fill" herein does not mean manual entering by a user, but that the user needs to fill in the password by means of sound production when reading an unlocking character string. For example, as shown in FIG. 2, the text characters displayed on the display panel 101 may be "23_8_9_0", that is, to instruct the user to fill passwords in three locations: between 3 and 8, between 8 and 9, and between 9 and 0. If passwords filled by the user are abc, the user reads "23a8b9c0" .

In addition, the processor 103 needs to generate the password character string according to the first-type character and the to-be-entered password character before the display panel 101 randomly displays the string of text characters on the lock screen of the terminal. The to-be-entered password character is a password preset by the user. If a text password preset by a real user of the terminal, that is, the to-be-entered password, is 269, the password character string is "23286990". That is, a location of the to-be-entered password character in the password character string is the same as a location of the second-type character in the text characters.

The microphone 102 is configured to receive voice information.

It should be noted that the user herein is a user that currently wants to unlock and use the terminal, and may be the real user of the terminal, or may be another user. This is not limited herein. In specific implementation, the user reads successively according to the unlocking character string displayed by the display panel 101. As shown in FIG. 2, if passwords successively filled between 3 and 8, between 8 and 9, and between 9 and 0 by the user are abc, the user reads "23a8b9c0".

In addition, the second-type character is in a random location in the text characters. Although the preset password character string remains unchanged, the user inserts a password character in a random location during reading. Therefore, a person nearby cannot steal, by means of listening, a real preset password character string, and voice unlocking security is improved.

The processor 103 is configured to: recognize an unlocking character string from the voice information; determine whether the unlocking character string matches the password character string; and if the unlocking character string matches the password character string, parse the voice information, to obtain a voiceprint in the voice information.

That is, it is determined whether the password filled by the user in the location corresponding to the second-type character is correct and whether the first-type character read by the user is correct. As described above, if the password preset by the user, that is, the to-be-entered password character, is abc, the user reads "23a8b9c0", that is, the password filled in the location corresponding to the second-type character is correct. Therefore, the voiceprint, that is, a voiceprint of the user, in the voice information can be further obtained.

In addition, it should be noted that the to-be-entered password character and the displayed first-type character may include a same character, or may not include a same character. This is not limited herein.

The processor 103 is further configured to: determine whether the voiceprint in the voice information is the same as a preset voiceprint, where the preset voiceprint is obtained according to the preset character set; and perform unlocking if it is determined that the voiceprint in the voice information is the same as the preset voiceprint.

It should be noted that the preset voiceprint is a voiceprint that is of the real user of the terminal and that is obtained by the terminal according to recording after the real user of the terminal pre-reads each character in the preset character set. If the voiceprint in the voice information is the same as the preset voiceprint, it indicates that a user that currently performs unlocking is the real user of the terminal. Therefore, the terminal can be unlocked.

The processor 103 is further configured to: receive a setting instruction before the lock screen randomly displays the string of text characters, and generate the preset character set after receiving the setting instruction.

Herein, the user selects a voiceprint setting function key on a setting page. If the terminal detects that the voiceprint setting key is in an enabled state, the terminal generates the setting instruction. If it indicates that a voiceprint needs to be set, the processor 103 receives the setting instruction, and generates the preset character set.

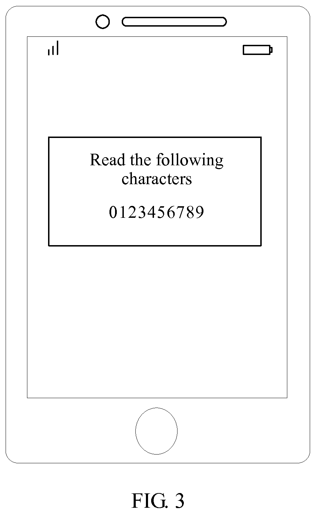

The display panel 101 is further configured to display a training character string. The training character string includes all characters in the preset character set. In specific implementation, the training character string is displayed in a manner shown in FIG. 3, that is, the training character string is successively arranged and displayed on the display panel, to instruct the user to successively read characters. Certainly, a sequence of arranging the characters is not limited, and the characters may be randomly arranged. For example, as shown in FIG. 3, the user is instructed to "read the following characters 0123456789 at least three times". "0123456789" is the training character string. Alternatively, the user may be instructed to read the training character string in multiple times. A training character string read each time may be different, but includes all characters in the preset character set. For example, the user is instructed to successively read "0123456789", "2468975013", and "9013765248".

The microphone 102 is further configured to receive training voice information, and the training voice information is used for instructing the user to read the training character string. In specific implementation, the user may read the training character string multiple times (for example, at least three times), so that the voiceprint of the user is accurately extracted.

The processor 103 is further configured to parse the training voice information, to obtain the preset voiceprint.

The processor 103 is specifically configured to: determine whether characters included in the unlocking character string are the same as characters included in the password character string; if the characters included in the unlocking character string are the same as the characters included in the password character string, determine whether a location of each character in the unlocking character string is the same as a location of each character in the password character string; and if the location of each character in the unlocking character string is the same as the location of each character in the password character string, determine that the unlocking character string matches the password character string.

That is, the unlocking character string read by the user needs to be in a one-to-one correspondence with the password character string, so that it can be considered that the unlocking character string matches the password character string. For example, a preset password character string is 1268, and only when characters read by the user are successively 1268, it can be determined that the unlocking character string matches the preset password character string. If characters read by the user are successively 1682 or 2861, it cannot be considered that the unlocking character string matches the password character string.

The processor 103 is further configured to: before the display panel 101 randomly displays the text characters, control the terminal to enter a locked state, and receive an unlock instruction.

In specific implementation, if the processor 103 detects that the terminal has not been operated within preset duration (for example, one minute), the processor 103 controls the terminal to enter a locked state. The receiving an unlock instruction herein may be that a peripheral button of the terminal is pressed, or the display panel 101 of the terminal is lighted.

In addition, the terminal further includes a prompter. If the processor determines that the N password characters do not match the preset password character string, the prompter indicates that unlocking fails.

It should be noted that the prompter may be the display panel 101 or a loudspeaker of the terminal. Specifically, the display panel may display a text to indicate that unlocking fails, or the loudspeaker of the terminal may play a voice to indicate that unlocking fails.

The prompter is further configured to: if the determining unit determines that the voiceprint in the voice information is different from the preset voiceprint, indicate that unlocking fails.

Further, the loudspeaker is further configured to: after the display panel 101 randomly displays the string of text characters on the lock screen of the terminal, instruct the user to enter the unlocking character string by using a voice. The user may be instructed, by using a voice, to read the first-type character displayed on an unlock screen and fill the password in the location of the second-type character, to enter the unlocking character string by using a voice.

Alternatively, the display panel 101 is configured to: after randomly displaying the string of text characters on the lock screen of the terminal, instruct the user to enter the unlocking character string by using a voice. The display panel may display a literal text on the unlock screen to instruct the user to enter the unlocking character string by using a voice, for example, display "read displayed digits and fill a password in a location where a digit is not shown" on the unlock screen.

It should be noted that, the terminal 10 may be a terminal device such as a mobile phone, a tablet computer, a notebook computer, a UMPC (Ultra-mobile Personal Computer, ultra-mobile personal computer), a netbook, a PDA (Personal Digital Assistant, personal digital assistant), or the like.

Each compositional part of the terminal 10 is described below in detail with reference to FIG. 1.

Optionally, the display panel 101 may be configured by using an LCD (Liquid Crystal Display, liquid crystal display), an OLED (Organic Light-Emitting Diode, organic light-emitting diode), or the like.

The microphone 102 converts a collected sound signal (for example, the unlocking character string or the training character string read by the user) into audio data, and transmits the audio data to the processor 101 for further processing. For example, the microphone 102 receives the voice information read by the user, determines audio data corresponding to the second-type character from the audio data, converts the audio data into text information, and then determines whether the text information matches the preset password character string.

The processor 103 is a control center of the terminal 10, and connects to various parts of the terminal by using various interfaces and lines. The processor 103 performs various functions of the terminal 10 and data processing by running or executing a software program and/or a module stored in the memory 104 and by invoking data stored in the memory 104, to perform overall monitoring on the terminal. Optionally, the processor 380 may include one or more processing units. Preferably, an application processor and a modem processor may be integrated on the processor 103. The application processor mainly processes an operating system, a user interface, an application program, and the like, and the modem processor mainly processes radio communications. It may be understood that the foregoing modem processor may not be integrated into the processor 103.

The memory 104 may be configured to store a software program and a module, and the processor 103 performs various functional applications of the terminal 10 and data processing by running the software program and the module that are stored in the memory 104. The memory 104 may mainly include a program storage area and a data storage area. The program storage area may store an operating system, an application required by at least one function (such as an audio play function or an image play function), and the like, and the data storage area may store data (such as audio data, image data, or a phonebook) created according to use of the terminal 10, and the like. In addition, the memory 104 may include a high-speed random access memory, and may further include a nonvolatile memory, such as at least one magnetic disk storage component, a flash memory component, or another volatile solid-state storage component.

Although not shown, the terminal 10 further includes a power supply (such as a battery) that supplies power to the parts. Preferably, the power supply may be logically connected to the processor 103 by using a power management system, so that functions such as charging and discharging management and power consumption management are implemented by using the power management system.

The terminal 10 may further include a WiFi (wireless fidelity, Wireless Fidelity) module, a Bluetooth module, and the like, which are not described herein.

The terminal provided in the present invention randomly displays the unlocking character string, and randomly displays the text characters including the first-type character and the second-type character, and the second-type character is used to indicate a location of the to-be-entered password. The user needs to fill the password in the location of the second-type character during reading, and the terminal parses the voice information entered by the user, to obtain the unlocking character string, and can be unlocked only when the unlocking character string matches the password character string and voiceprint recognition of the voice information succeeds. Existing voice unlocking depends only on the voiceprint to perform recognition. Because a voiceprint extracted by using a current technology is not unique, a current voice unlocking solution is not of high accuracy, and security is reduced. The text password and the voiceprint recognition are combined in the present invention, so that a problem of low unlocking accuracy caused by voiceprint non-uniqueness is avoided, and voice unlocking accuracy can be improved. In addition, because the second-type character in which the password needs to be filled is in a random location in the text characters displayed on the unlock screen, the password is not easily stolen, and voice unlocking security is improved.

### Embodiment 2

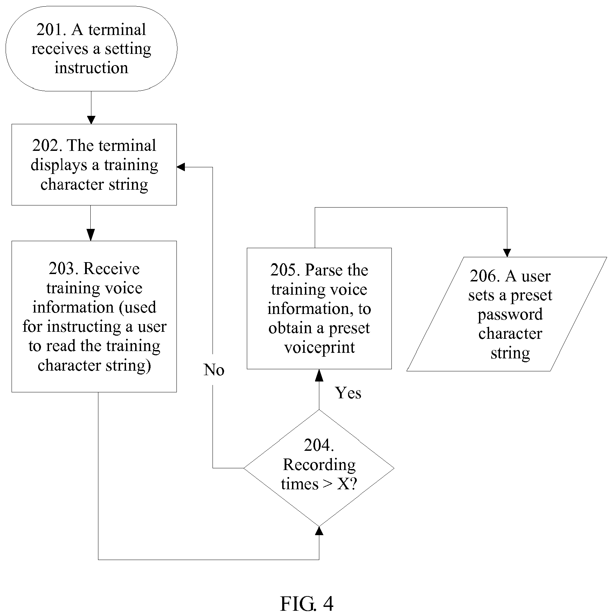

This embodiment of the present invention provides an unlocking setting method, applied to the terminal shown in FIG. 1. As shown in FIG. 4, the method includes the following steps.

201. A terminal receives a setting instruction, and generates a preset character set.

202. The terminal displays a training character string, where the training character string includes all characters in the preset character set.

203. The terminal receives training voice information, where the training voice information is used for instructing a user to read the training character string.

In specific implementation, the terminal records a voice of the user, and obtains the training voice information.

204. The terminal determines whether recoding is performed more than X times.

X herein may be any value, and is set by the user or is preset at delivery of the terminal.

If the recoding is performed no more than X times, step 202 is performed, and if the recoding performed more than X times, step 205 is performed.

205. The terminal parses the training voice information, to obtain a preset voiceprint.

The preset voiceprint is a voiceprint of a real user of the terminal.

206. The terminal instructs the user to set a preset password character string.

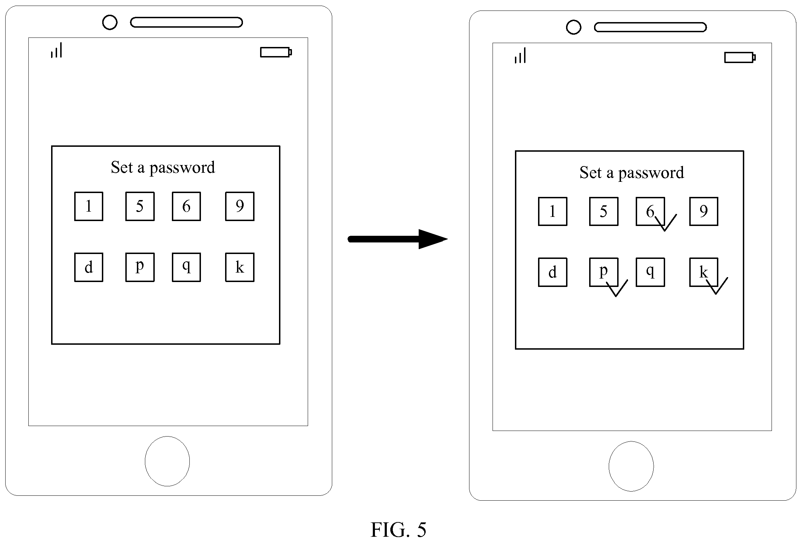

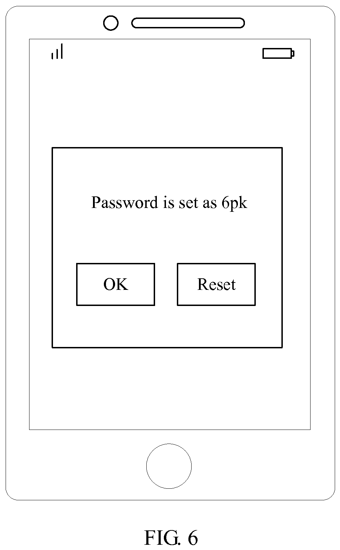

Specifically, all the characters in the preset character set may be displayed on a display panel of the terminal, to help the user select the preset password character string from all the characters. For example, as shown in FIG. 5, the characters displayed by the terminal may be 1569dpqk. If the user successively selects "6pk", the terminal confirms that the preset password character string that is set by the user is "6pk". In specific implementation, when the user taps a location corresponding to a character on the display panel, it is considered that the user selects the character. Further, to obtain a sequence of the characters selected by the user, the preset password character string selected by the user may be further displayed on the display panel, to prompt the user whether to confirm the preset password character string. For example, as shown in FIG. 6, the user is notified that the preset password character string is "6pk" and can select "OK" or "Reset".

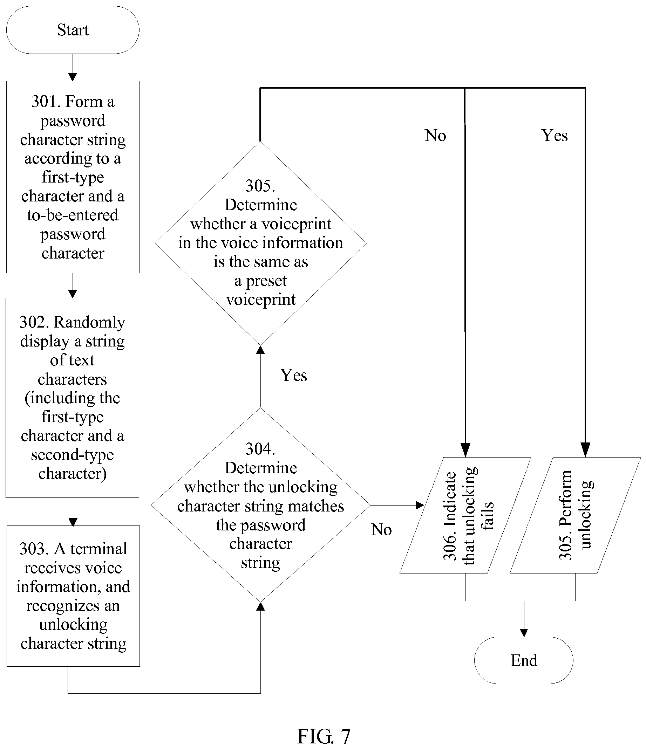

Based on the foregoing unlocking setting method, this embodiment of the present invention provides a voice unlocking method for a terminal. As shown in FIG. 7, the method includes the following steps.

301. The terminal generates a first-type character, and forms a password character string according to the first-type character and a to-be-entered password character.

The to-be-entered password character herein is a text password preset by a user, and a location of the to-be-entered password character is the same as a location of the second-type character. For example, the second-type character is "_", and the location is "23_8_9_0". If password characters preset by the user, that is, to-be-entered password characters are abc, the formed password character string is "23a8b9c0".

It should be noted that the to-be-entered password character may be the same as or different from the randomly displayed first-type character. This is not limited herein.

302. A string of text characters is randomly displayed on a lock screen of the terminal, where the text characters include the first-type character and a sccond-typc character.

The second-type character is used to indicate a location of the to-be-entered password character in the text characters, and the first-type character and the to-be-entered password character form a password character string used for unlocking the terminal. In specific implementation, M first-type characters and N second-type characters may be displayed, and the user is instructed to fill N passwords in locations of the N second-type characters in addition to reading the M first-type characters. The first-type character belongs to the preset character set, and the second-type character does not belong to the preset character set.

In addition, the first-type character herein may be a digit, a letter, or the like, and the second-type character may be "_", "^{∗}", or the like, to indicate that a password needs to be filled in a location corresponding to the second-type character during voice unlocking. For example, the unlocking character string is "23_8_9_0", and the user is instructed to fill passwords in three locations: between 3 and 8, between 8 and 9, and between 9 and 0. If passwords filled by the user are abc, the user reads "23a8b9c0".

Certainly, after step 302, the terminal may further instruct the user to enter the unlocking character string.

In specific implementation, the user may be instructed, by using a voice, to read the first-type character displayed on an unlock screen and fill the password in the location of the second-type character, to enter the unlocking character string by using a voice. Certainly, a literal text may be displayed on the unlock screen to instruct the user to enter the unlocking character string by using a voice, for example, "read displayed digits and fill a password in a location where a digit is not shown" is displayed on the unlock screen.

303. The terminal receives voice information, and recognizes an unlocking character string from the voice information.

In specific implementation, the password corresponding to the second-type character and the first-type character that are read by the user are recorded.

Certainly, because the user reads the first-type character according to a sequence of the text characters displayed on the unlock screen of the terminal, and fills the password in the location of the second-type character by using a voice, the voice information also indicates a relative sequence between the first-type character and the password that is entered by the user by using a voice.

304. The terminal determines whether the unlocking character string matches the password character string.

In specific implementation, it is determined that whether characters included in the unlocking character string are the same as characters included in the password character string. If the characters included in the unlocking character string are the same as the characters included in the password character string, it is determined that whether a location of each character in the unlocking character string is the same as a location of each character in the password character string. If the location of each character in the unlocking character string is the same as the location of each character in the password character string, it is determined that the unlocking character string matches the password character string.

That is, the unlocking character string read by the user needs to be in a one-to-one correspondence with the characters included in the preset password character string, so that it can be considered that the unlocking character string matches the preset password character string.

If the unlocking character string does not match the password character string, step 306 is performed. If the N password characters match the preset password character string, step 304 is performed.

305. The terminal parses the voice information, to obtain a voiceprint in the voice information, and determines whether the voiceprint in the voice information is the same as a preset voiceprint.

The preset voiceprint is obtained according to the preset character set. That is, the terminal pre-reads each character in the preset character set, and the terminal obtains the preset voiceprint according to recording.

If the voiceprint in the voice information is the same as the preset voiceprint, step 306 is performed. If the voiceprint in the voice information is different from the preset voiceprint, step 307 is performed.

306. The terminal is unlocked.

307. The terminal indicates that unlocking fails.

Specifically, a text "unlocking fails" may be displayed in a specific area of a display panel of the terminal. Alternatively, a loudspeaker plays a voice to indicate that unlocking fails.

Certainly, after indicating that unlocking fails, the terminal may further randomly display an unlocking character string again.

According to the method provided in the present invention, the text characters including the first-type character and the second-type character are randomly displayed, and the second-type character is used to indicate a location of a to-be-entered password. The user needs to fill the password in the location of the second-type character during reading, and the terminal parses the voice information entered by the user, to obtain the unlocking character string, and can be unlocked only when the unlocking character string matches the password character string and voiceprint recognition of the voice information succeeds. Existing voice unlocking depends only on the voiceprint to perform recognition. Because a voiceprint extracted by using a current technology is not unique, a current voice unlocking solution is not of high accuracy, and security is reduced. The text password and the voiceprint recognition are combined in the present invention, so that a problem of low unlocking accuracy caused by voiceprint non-uniqueness is avoided, and voice unlocking accuracy can be improved. In addition, because the second-type character indicating password filling is in a random location in the text characters displayed on the unlock screen, the password is not easily stolen, and voice unlocking security is improved.

### Embodiment 3

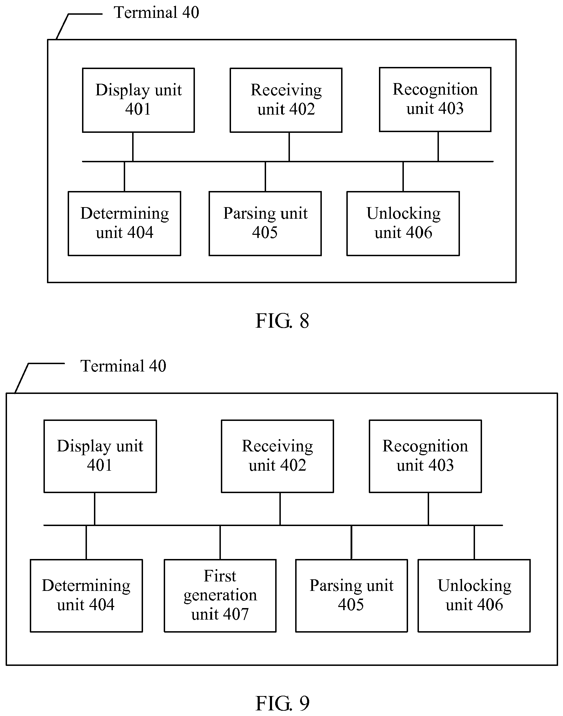

This embodiment of the present invention provides a terminal 40. As shown in FIG. 8, the terminal 40 includes a display unit 401, a receiving unit 402, a recognition unit 403, a determining unit 404, a parsing unit 405, and an unlocking unit 406.

The display unit 401 is configured to randomly display a string of text characters on a lock screen of the terminal. The text characters include a first-type character and a second-type character, the second-type character is used to indicate a location of a to-be-entered password character in the text characters, and the first-type character and the to-be-entered password character form a password character string used for unlocking the terminal.

The receiving unit 402 is configured to receive voice information.

The recognition unit 403 is configured to recognize an unlocking character string from the voice information.

The determining unit 404 is configured to determine whether the unlocking character string matches the password character string.

The parsing unit 405 is configured to: if the determining unit 404 determines that the unlocking character string matches the password character string, parse the voice information, to obtain a voiceprint in the voice information.

The determining unit 404 is further configured to determine whether the voiceprint in the voice information is the same as a preset voiceprint. The preset voiceprint is obtained according to the preset character set.

The unlocking unit 406 is configured to unlock the terminal after the determining unit determines that the voiceprint in the voice information is the same as the preset voiceprint.

As shown in FIG. 9, the terminal further includes a first generation unit 407. The first generation unit 407 is further configured to generate the password character string according to the first-type character string and the to-be-entered password character before the display unit 401 displays the string of random text characters on the lock screen of the terminal. The to-be-entered password character herein is a text password preset by a user, and a location of the to-be-entered password character is the same as a location of the second-type character. For example, the second-type character is "_", and the location is "23_8_9_0". If a password preset by the user, that is, the to-be-entered password character, is abc, the formed password character string is "23a8b9c0".

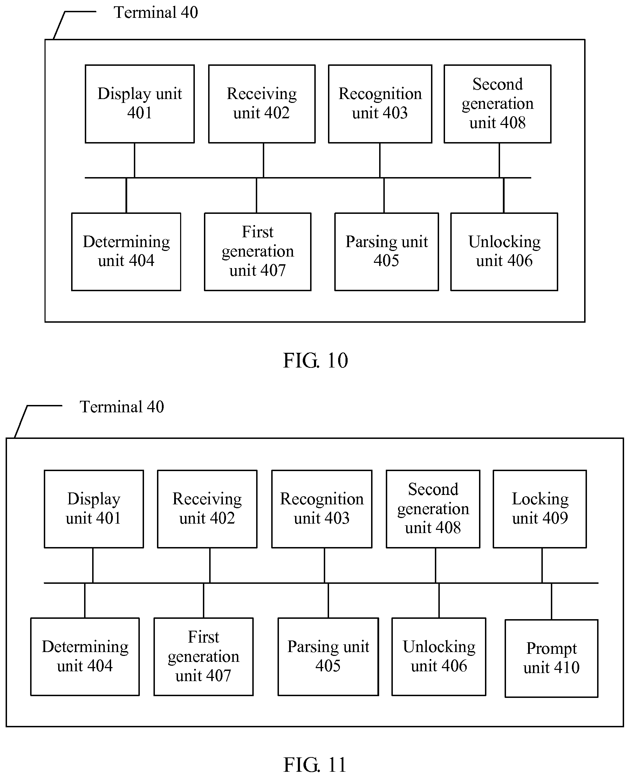

As shown in FIG. 10, the terminal 40 further includes a second generation unit 408.

The receiving unit 402 is further configured to receive a setting instruction before the display unit 401 randomly displays the unlocking character string.

The second generation unit 408 is configured to generate the preset character set after the receiving unit 402 receives the setting instruction.

The display unit 401 is further configured to display a training character string. The training character string includes all characters in the preset character set.

The receiving unit 402 is further configured to receive training voice information. The training voice information is used for instructing the user to read the training character string.

The parsing unit 405 is further configured to parse the training voice information, to obtain the preset voiceprint.

Further, the determining unit 404 is specifically configured to: determine whether characters included in the unlocking character string arc the same as characters included in the password character string; if the characters included in the unlocking character string are the same as the characters included in the password character string, determine whether a location of each character in the unlocking character string is the same as a location of each character in the password character string; and if the location of each character in the unlocking character string is the same as the location of each character in the password character string, determine that the unlocking character string matches the password character string.

As shown in FIG. 11, the terminal 40 further includes a locking unit 409 and a prompt unit 410.

The locking unit 409 is configured to: before the display unit displays the unlocking character string, control the terminal to enter a locked state.

The receiving unit 402 is further configured to receive an unlock instruction.

The prompt unit 410 is configured to: if the determining unit determines that the N password characters do not match the preset password character string, indicate that unlocking fails.

The prompt unit 410 is configured to: if the determining unit determines that the voiceprint in the voice information is different from the preset voiceprint, indicate that unlocking fails.

The prompt unit 410 is configured to: after the display unit randomly displays the string of text characters on the lock screen of the terminal, instruct the user to enter the unlocking character string by using a voice.

It should be noted that the display unit 401 in this embodiment may be a display panel 101 of the terminal. The receiving unit 402 may be a microphone 102 of the terminal or a processor 103 of the terminal. When the microphone 102 of the terminal receives the voice information, the processor of the terminal receives the setting instruction or the unlock instruction. The recognition unit 403, a construction unit 404, the determining unit 405, the parsing unit 406, the unlocking unit 407, the generation unit 408, and the locking unit 409 may be integrated into the processor 103 of the terminal 10, or may be stored in a memory 104 of the terminal in a form of program code. The processor 103 invokes the code stored in the memory 104, and performs functions of the determining unit 405, the parsing unit 406, the unlocking unit 407, the generation unit 408, and the locking unit 407. The prompt unit 410 may be the microphone of the terminal or the display panel 101 of the terminal.

The terminal provided in the present invention randomly displays the text characters including the first-type character and the second-type character, and the second-type character is used to indicate a location of a to-be-entered password. The user needs to fill the password in the location of the second-type character during reading, and the terminal parses the voice information entered by the user, to obtain the unlocking character string, and can be unlocked only when the unlocking character string matches the password character string and voiceprint recognition of the voice information succeeds. Existing voice unlocking depends only on the voiceprint to perform recognition. Because a voiceprint extracted by using a current technology is not unique, a current voice unlocking solution is not of high accuracy, and security is reduced. The text password and the voiceprint recognition are combined in the present invention, so that a problem of low unlocking accuracy caused by voiceprint non-uniqueness is avoided, and voice unlocking accuracy can be improved. In addition, because the second-type character indicating password filling is in a random location in the text characters displayed on an unlock screen, the password is not easily stolen, and voice unlocking security is improved.

The foregoing descriptions about implementations allow a person skilled in the art to understand that, for the purpose of convenient and brief description, division of the foregoing function modules is taken as an example for illustration. In actual application, the foregoing functions can be allocated to different modules and implemented according to a requirement, that is, an inner structure of an apparatus is divided into different function modules to implement all or part of the functions described above. For a detailed working process of the foregoing apparatus, refer to a corresponding process in the foregoing method embodiments, and details are not described herein again.

The units described as separate parts may or may not be physically separate, and parts displayed as units may be one or more physical units, may be located in one place, or may be distributed on different places. Some or all of the units may be selected according to actual requirements to achieve the objectives of the solutions of the embodiments. In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of the present invention essentially, or the part contributing to the prior art, or all or some of the technical solutions may be implemented in the form of a software product. The software product is stored in a storage medium and includes several instructions for instructing a device (which may be a single-chip microcomputer, a chip or the like) or a processor (processor) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A voice unlocking method for a terminal, comprising:
• randomly displaying a string of text characters on a lock screen of the terminal, wherein the text characters comprise a first-type character and a second-type character, the second-type character is used to indicate a location of a to-be-entered password character in the text characters, and the first-type character and the to-be-entered password character form a password character string used for unlocking the terminal (step 302); wherein the to-be-entered password character is a password preset by the user, and wherein the first-type characters and the second-type characters are randomly generated by the terminal;
• receiving, by the terminal, voice information, and recognizing an unlocking character string from the voice information (step 303);
• determining, by the terminal, whether the unlocking character string matches the password character string (step 304);
• if the unlocking character string matches the password character string, parsing, by the terminal, the voice information, to obtain a voiceprint in the voice information;
• determining, by the terminal, whether the voiceprint in the voice information is the same as a preset voiceprint (step 305); and
• unlocking the terminal if the voiceprint of the voice information is the same as the preset voiceprint (step 305).

2. The method according to claim 1, wherein before the displaying a string of random text characters on a lock screen of the terminal, the method further comprises:
generating, by the terminal, the password character string according to the first-type character string and the to-be-entered password character.

3. The method according to claim 1 or 2, wherein before the displaying a string of random text characters on a lock screen of the terminal, the method further comprises:
receiving, by the terminal, a setting instruction, and generating a preset character set;
displaying, by the terminal, a training character string, wherein the training character string comprises all characters in the preset character set;
receiving, by the terminal, training voice information, wherein the training voice information is used for instructing a user to read the training character string; and
parsing, by the terminal, the training voice information, to obtain the preset voiceprint.

4. The method according to any one of claims 1 to 3, wherein the determining, by the terminal, whether the unlocking character string matches the password character string specifically comprises:
determining whether characters comprised in the unlocking character string are the same as characters comprised in the password character string;
if the characters comprised in the unlocking character string are the same as the characters comprised in the password character string, determining whether a location of each character in the unlocking character string is the same as a location of each character in the password character string; and
if the location of each character in the unlocking character string is the same as the location of each character in the password character string, determining that the unlocking character string matches the password character string.

5. The method according to any one of claims 1 to 4, wherein after the randomly displaying a string of text characters on a lock screen of the terminal, the method further comprises: instructing the user to enter the unlocking character string by using a voice.

6. The method according to any one of claims 3 to 5, wherein the first-type character belongs to the preset character set, and the second-type character does not belong to the preset character set.

7. A terminal, comprising:
• a display unit (401), configured to randomly display a string of text characters on a lock screen of the terminal, wherein the text characters comprise a first-type character and a second-type character, the second-type character is used to indicate a location of a to-be-entered password character in the text characters, and the first-type character and the to-be-entered password character form a password character string used for unlocking the terminal; wherein the to-be-entered password character is a password pre-set by the user, and wherein the first-type characters and the second-type characters are randomly generated by the terminal;
• a receiving unit (402), configured to receive voice information;
• a recognition unit (403), configured to recognize an unlocking character string from the voice information;
• a determining unit (404), configured to determine whether the unlocking character string matches the password character string;
• a parsing unit (405), configured to: when the unlocking character string matches the password character string, parse the voice information, to obtain a voiceprint in the voice information; wherein
• the determining unit (404) is further configured to determine whether the voiceprint in the voice information is the same as a preset voiceprint; and
• an unlocking unit (406), configured to unlock the terminal after the determining unit determines that the voiceprint in the voice information is the same as the preset voiceprint.

8. The terminal according to claim 7, further comprising a first generation unit, wherein the first generation unit is configured to generate the password character string according to the first-type character string and the to-be-entered password character before the display unit displays the string of random text characters on the lock screen of the terminal.

9. The terminal according to claim 7 or 8, further comprising a second generation unit, wherein
the receiving unit is further configured to receive a setting instruction before the display unit displays the string of random text characters on the lock screen of the terminal;
the second generation unit is configured to generate a preset character set after the receiving unit receives the setting instruction;
the display unit is further configured to display a training character string, wherein the training character string comprises all characters in the preset character set;
the receiving unit is further configured to receive training voice information, wherein the training voice information is used for instructing a user to read the training character string; and
the parsing unit is further configured to parse the training voice information, to obtain the preset voiceprint.

10. The terminal according to any one of claims 7 to 9, wherein the determining unit is specifically configured to: determine whether characters comprised in the unlocking character string are the same as characters comprised in the password character string;
if the characters comprised in the unlocking character string are the same as the characters comprised in the password character string, determine whether a location of each character in the unlocking character string is the same as a location of each character in the password character string; and
if the location of each character in the unlocking character string is the same as the location of each character in the password character string, determine that the unlocking character string matches the password character string.

11. The terminal according to any one of claims 7 to 10, further comprising a prompt unit, wherein
the prompt unit is configured to: after the display unit randomly displays the string of text characters on the lock screen of the terminal, instruct the user to enter the unlocking character string by using a voice.

12. The terminal according to any one of claims 9 to 11, wherein the first-type character belongs to the preset character set, and the second-type character does not belong to the preset character set.

## Patentansprüche

1. Stimmentsperrverfahren für ein Endgerät, umfassend:
• zufälliges Anzeigen einer Folge von Textzeichen auf einem Sperrbildschirm des Endgeräts, wobei die Textzeichen ein Zeichen eines ersten Typs und ein Zeichen eines zweiten Typs umfassen, wobei das Zeichen des zweiten Typs verwendet wird, um eine Position eines einzugebenden Passwortzeichens in den Textzeichen anzuzeigen, und das Zeichen des ersten Typs und das einzugebende Passwortzeichen eine Passwortzeichenfolge bilden, die zum Entsperren des Endgeräts verwendet wird (Schritt 302); wobei das einzugebende Passwortzeichen eine Passwortvoreinstellung durch den Benutzer ist, und wobei die Zeichen des ersten Typs und die Zeichen des zweiten Typs durch das Endgerät zufällig erzeugt werden;
• Empfangen, durch das Endgerät, einer Stimminformation, und Erkennen einer Entsperrzeichenfolge aus der Stimminformation (Schritt 303);
• Bestimmen, durch das Endgerät, ob die Entsperrzeichenfolge mit der Passwortzeichenfolge übereinstimmt (Schritt 304);
• falls die Entsperrzeichenfolge mit der Passwortzeichenfolge übereinstimmt, Analysieren, durch das Endgerät, der Stimminformation, um einen Stimmabdruck in der Stimminformation zu erhalten;
• Bestimmen, durch das Endgerät, ob der Stimmabdruck in der Stimminformation derselbe wie ein voreingestellter Stimmabdruck ist (Schritt 305); und
• Entsperren des Endgeräts, falls der Stimmabdruck der Stimminformation derselbe wie der voreingestellte Stimmabdruck ist (Schritt 305).

2. Verfahren nach Anspruch 1, wobei vor dem Anzeigen einer Folge von zufälligen Textzeichen auf einem Sperrbildschirm des Endgeräts das Verfahren ferner umfasst: Erzeugen, durch das Endgerät, der Passwortzeichenfolge gemäß der Zeichenfolge des ersten Typs und dem einzugebenden Passwortzeichen.

3. Verfahren nach Anspruch 1 oder 2, wobei vor dem Anzeigen einer Folge von zufälligen Textzeichen auf einem Sperrbildschirm des Endgeräts das Verfahren ferner umfasst:
Empfangen, durch das Endgerät, einer Einstellungsanweisung, und Erzeugen eines voreingestellten Zeichensatzes;
Anzeigen, durch das Endgerät, einer Trainingszeichenfolge, wobei die Trainingszeichenfolge alle Zeichen in dem voreingestellten Zeichensatz umfasst;
Empfangen, durch das Endgerät, einer Trainingsstimminformation, wobei die Trainingsstimminformation verwendet wird, um einen Benutzer anzuweisen, die Trainingszeichenfolge zu lesen; und
Analysieren, durch das Endgerät, der Trainingsstimminformation, um den voreingestellten Stimmabdruck zu erhalten.

4. Verfahren nach einem der Ansprüche 1 bis 3, wobei das Bestimmen, durch das Endgerät, ob die Entsperrzeichenfolge mit der Passwortzeichenfolge übereinstimmt, insbesondere umfasst:
Bestimmen, ob Zeichen, die in der Entsperrzeichenfolge enthalten sind, dieselben wie Zeichen sind, die in der Passwortzeichenfolge enthalten sind;
falls die Zeichen, die in der Entsperrzeichenfolge enthalten sind, dieselben wie die Zeichen sind, die in der Passwortzeichenfolge enthalten sind, Bestimmen, ob eine Position jedes Zeichens in der Entsperrzeichenfolge dieselbe wie eine Position jedes Zeichens in der Passwortzeichenfolge ist; und
falls die Position jedes Zeichens in der Entsperrzeichenfolge dieselbe wie die Position jedes Zeichens in der Passwortzeichenfolge ist, Bestimmen, dass die Entsperrzeichenfolge mit der Passwortzeichenfolge übereinstimmt.

5. Verfahren nach einem der Ansprüche 1 bis 4, wobei nach dem zufälligen Anzeigen einer Folge von Textzeichen auf einem Sperrbildschirm des Endgeräts das Verfahren ferner umfasst:
Anweisen des Benutzers, die Entsperrzeichenfolge unter Verwendung einer Stimme einzugeben.

6. Verfahren nach einem der Ansprüche 3 bis 5, wobei das Zeichen des ersten Typs zu dem voreingestellten Zeichensatz gehört, und das Zeichen des zweiten Typs nicht zu dem voreingestellten Zeichensatz gehört.

7. Endgerät, umfassend:
• eine Anzeigeeinheit (401), die konfiguriert ist, eine Folge von Textzeichen auf einem Sperrbildschirm des Endgeräts zufällig anzuzeigen, wobei die Textzeichen ein Zeichen eines ersten Typs und ein Zeichen eines zweiten Typs umfassen, wobei das Zeichen des zweiten Typs verwendet wird, um eine Position eines einzugebenden Passwortzeichens in den Textzeichen anzuzeigen, und das Zeichen des ersten Typs und das einzugebende Passwortzeichen eine Passwortzeichenfolge bilden, die zum Entsperren des Endgeräts verwendet wird; wobei das einzugebende Passwortzeichen eine Passwortvoreinstellung durch den Benutzer ist, und wobei die Zeichen des ersten Typs und die Zeichen des zweiten Typs durch das Endgerät zufällig erzeugt werden;
• eine Empfangseinheit (402), die konfiguriert ist, eine Stimminformation zu empfangen;
• eine Erkennungseinheit (403), die konfiguriert ist, eine Entsperrzeichenfolge aus der Stimminformation zu erkennen;
• eine Bestimmungseinheit (404), die konfiguriert ist, zu bestimmen, ob die Entsperrzeichenfolge mit der Passwortzeichenfolge übereinstimmt;
• eine Analyseeinheit (405), die zu Folgendem konfiguriert ist: wenn die Entsperrzeichenfolge mit der Passwortzeichenfolge übereinstimmt, Analysieren der Stimminformation, um einen Stimmabdruck in der Stimminformation zu erhalten; wobei
• die Bestimmungseinheit (404) ferner konfiguriert ist, zu bestimmen, ob der Stimmabdruck in der Stimminformation derselbe wie ein voreingestellter Stimmabdruck ist; und
• eine Entsperreinheit (406), die konfiguriert ist, das Endgerät zu entsperren, nachdem die Bestimmungseinheit bestimmt, dass der Stimmabdruck in der Stimminformation derselbe wie der voreingestellte Stimmabdruck ist.

8. Endgerät nach Anspruch 7, ferner umfassend eine erste Erzeugungseinheit, wobei die erste Erzeugungseinheit konfiguriert ist, die Passwortzeichenfolge gemäß der Zeichenfolge des ersten Typs und dem einzugebenden Passwortzeichen zu erzeugen, bevor die Anzeigeeinheit die Folge von zufälligen Textzeichen auf dem Sperrbildschirm des Endgeräts anzeigt.

9. Endgerät nach Anspruch 7 oder 8, ferner umfassend eine zweite Erzeugungseinheit, wobei
die Empfangseinheit ferner konfiguriert ist, eine Einstellungsanweisung zu empfangen, bevor die Anzeigeeinheit die Folge von zufälligen Textzeichen auf dem Sperrbildschirm des Endgeräts anzeigt;
die zweite Erzeugungseinheit konfiguriert ist, einen voreingestellten Zeichensatz zu erzeugen, nachdem die Empfangseinheit die Einstellungsanweisung empfängt;
die Anzeigeeinheit ferner konfiguriert ist, eine Trainingszeichenfolge anzuzeigen, wobei die Trainingszeichenfolge alle Zeichen in dem voreingestellten Zeichensatz umfasst;
die Empfangseinheit ferner konfiguriert ist, eine Trainingsstimminformation zu empfangen, wobei die Trainingsstimminformation verwendet wird, um einen Benutzer anzuweisen, die Trainingszeichenfolge zu lesen; und
die Analyseeinheit ferner konfiguriert ist, die Trainingsstimminformation zu analysieren, um den voreingestellten Stimmabdruck zu erhalten.

10. Endgerät nach einem der Ansprüche 7 bis 9, wobei die Bestimmungseinheit insbesondere zu Folgendem konfiguriert ist: Bestimmen, ob Zeichen, die in der Entsperrzeichenfolge enthalten sind, dieselben wie Zeichen sind, die in der Passwortzeichenfolge enthalten sind;
falls die Zeichen, die in der Entsperrzeichenfolge enthalten sind, dieselben wie die Zeichen sind, die in der Passwortzeichenfolge enthalten sind, Bestimmen, ob eine Position jedes Zeichens in der Entsperrzeichenfolge dieselbe wie eine Position jedes Zeichens in der Passwortzeichenfolge ist; und
falls die Position jedes Zeichens in der Entsperrzeichenfolge dieselbe wie die Position jedes Zeichens in der Passwortzeichenfolge ist, Bestimmen, dass die Entsperrzeichenfolge mit der Passwortzeichenfolge übereinstimmt.

11. Endgerät nach einem der Ansprüche 7 bis 10, ferner umfassend eine Aufforderungseinheit, wobei
die Aufforderungseinheit zu Folgendem konfiguriert ist: nachdem die Anzeigeeinheit die Folge von Textzeichen auf dem Sperrbildschirm des Endgeräts zufällig anzeigt, Anweisen des Benutzers, die Entsperrzeichenfolge unter Verwendung einer Stimme einzugeben.

12. Endgerät nach einem der Ansprüche 9 bis 11, wobei das Zeichen des ersten Typs zu dem voreingestellten Zeichensatz gehört, und das Zeichen des zweiten Typs nicht zu dem voreingestellten Zeichensatz gehört.

## Revendications

1. Procédé de déverrouillage vocal pour un terminal, comprenant :
• l'affichage de manière aléatoire d'une chaîne de caractères de texte sur un écran de verrouillage du terminal, les caractères de texte comprenant un caractère de premier type et un caractère de second type, le caractère de second type étant utilisé pour indiquer un emplacement d'un caractère de mot de passe à saisir dans les caractères de texte, et le caractère de premier type et le caractère de mot de passe à saisir formant une chaîne de caractères de mot de passe utilisée pour déverrouiller le terminal (étape 302); le caractère de mot de passe à saisir étant un mot de passe prédéfini par l'utilisateur, et les caractères de premier type et les caractères de second type étant générés de manière aléatoire par le terminal ;
• la réception, par le terminal, d'informations vocales, et la reconnaissance d'une chaîne de caractères de déverrouillage à partir des informations vocales (étape 303) ;
• la détermination, par le terminal, du fait que la chaîne de caractères de déverrouillage correspond à la chaîne de caractères de mot de passe ou non (étape 304) ;
• si la chaîne de caractères de déverrouillage correspond à la chaîne de caractères de mot de passe, l'analyse, par le terminal, des informations vocales, pour obtenir une empreinte vocale dans les informations vocales ;
• la détermination, par le terminal, du fait que l'empreinte vocale dans les informations vocales est la même qu'une empreinte vocale prédéfinie ou non (étape 305) ; et
• le déverrouillage du terminal si l'empreinte vocale des informations vocales est la même que l'empreinte vocale prédéfinie (étape 305).

2. Procédé selon la revendication 1, avant l'affichage d'une chaîne de caractères de texte aléatoire sur un écran de verrouillage du terminal, le procédé comprenant en outre :
la génération, par le terminal, de la chaîne de caractères de mot de passe en fonction de la chaîne de caractères de premier type et du caractère de mot de passe à saisir.

3. Procédé selon la revendication 1 ou 2, avant l'affichage d'une chaîne de caractères de texte aléatoire sur un écran de verrouillage du terminal, le procédé comprenant en outre :
la réception, par le terminal, d'une instruction de réglage, et la génération d'un jeu de caractères prédéfini ;
l'affichage, par le terminal, d'une chaîne de caractères d'apprentissage, la chaîne de caractères d'apprentissage comprenant tous les caractères du jeu de caractères prédéfini ;
la réception, par le terminal, d'informations vocales d'apprentissage, les informations vocales d'apprentissage étant utilisées pour donner pour instruction à un utilisateur de lire la chaîne de caractères d'apprentissage ; et
l'analyse, par le terminal, des informations vocales d'apprentissage, pour obtenir l'empreinte vocale prédéfinie.

4. Procédé selon l'une quelconque des revendications 1 à 3, la détermination, par le terminal, du fait que la chaîne de caractères de déverrouillage correspond à la chaîne de caractères de mot de passe ou non comprenant spécifiquement :
la détermination du fait que des caractères compris dans la chaîne de caractères de déverrouillage sont les mêmes que des caractères compris dans la chaîne de caractères de mot de passe ou non ;
si les caractères compris dans la chaîne de caractères de déverrouillage sont les mêmes que les caractères compris dans la chaîne de caractères de mot de passe, la détermination du fait qu'un emplacement de chaque caractère dans la chaîne de caractères de déverrouillage est le même qu'un emplacement de chaque caractère dans la chaîne de caractères de mot de passe ou non ; et
si l'emplacement de chaque caractère dans la chaîne de caractères de déverrouillage est le même que l'emplacement de chaque caractère dans la chaîne de caractères de mot de passe, la détermination du fait que la chaîne de caractères de déverrouillage correspond à la chaîne de caractères de mot de passe.

5. Procédé selon l'une quelconque des revendications 1 à 4, après l'affichage aléatoire d'une chaîne de caractères de texte sur un écran de verrouillage du terminal, le procédé comprenant en outre :
le fait de donner pour instruction à l'utilisateur de saisir la chaîne de caractères de déverrouillage en utilisant une voix.

6. Procédé selon l'une quelconque des revendications 3 à 5, le caractère de premier type appartenant au jeu de caractères prédéfini, et le caractère de second type n'appartenant pas au jeu de caractères prédéfini.

7. Terminal, comprenant :
• une unité d'affichage (401), configurée pour afficher de manière aléatoire une chaîne de caractères de texte sur un écran de verrouillage du terminal, les caractères de texte comprenant un caractère de premier type et un caractère de second type, le caractère de second type étant utilisé pour indiquer un emplacement d'un caractère de mot de passe à saisir dans les caractères de texte, et le caractère de premier type et le caractère de mot de passe à saisir formant une chaîne de caractères de mot de passe utilisée pour déverrouiller le terminal ; le caractère de mot de passe à saisir étant un mot de passe prédéfini par l'utilisateur, et les caractères de premier type et les caractères de second type étant générés de manière aléatoire par le terminal ;
• une unité de réception (402), configurée pour recevoir des informations vocales ;
• une unité de reconnaissance (403), configurée pour reconnaître une chaîne de caractères de déverrouillage à partir des informations vocales ;
• une unité de détermination (404), configurée pour déterminer si la chaîne de caractères de déverrouillage correspond à la chaîne de caractères de mot de passe ou non ;
• une unité d'analyse (405), configurée pour: lorsque la chaîne de caractères de déverrouillage correspond à la chaîne de caractères de mot de passe, analyser les informations vocales, pour obtenir une empreinte vocale dans les informations vocales ;
• l'unité de détermination (404) étant en outre configurée pour déterminer si l'empreinte vocale dans les informations vocales est la même qu'une empreinte vocale prédéfinie ou non ; et
• une unité de déverrouillage (406), configurée pour déverrouiller le terminal après que l'unité de détermination a déterminé que l'empreinte vocale dans les informations vocales est la même que l'empreinte vocale prédéfinie.

8. Terminal selon la revendication 7, comprenant en outre une première unité de génération, la première unité de génération étant configurée pour générer la chaîne de caractères de mot de passe en fonction de la chaîne de caractères de premier type et du caractère de mot de passe à saisir avant que l'unité d'affichage affiche la chaîne de caractères de texte aléatoire sur l'écran de verrouillage du terminal.

9. Terminal selon la revendication 7 ou 8, comprenant en outre une deuxième unité de génération,
l'unité de réception étant en outre configurée pour recevoir une instruction de réglage avant que l'unité d'affichage n'affiche la chaîne de caractères de texte aléatoire sur l'écran de verrouillage du terminal ;
la deuxième unité de génération étant configurée pour générer un jeu de caractères prédéfini après que l'unité de réception a reçu l'instruction de réglage ;
l'unité d'affichage étant en outre configurée pour afficher une chaîne de caractères d'apprentissage, la chaîne de caractères d'apprentissage comprenant tous les caractères du jeu de caractères prédéfini ;
l'unité de réception étant en outre configurée pour recevoir des informations vocales d'apprentissage, les informations vocales d'apprentissage étant utilisées pour donner pour instruction à un utilisateur de lire la chaîne de caractères d'apprentissage ; et l'unité d'analyse étant en outre configurée pour analyser les informations vocales d'apprentissage, afin d'obtenir l'empreinte vocale prédéfinie.

10. Terminal selon l'une quelconque des revendications 7 à 9, l'unité de détermination étant spécifiquement configurée pour: déterminer si des caractères compris dans la chaîne de caractères de déverrouillage sont les mêmes que des caractères compris dans la chaîne de caractères de mot de passe ou non ;
si les caractères compris dans la chaîne de caractères de déverrouillage sont les mêmes que les caractères compris dans la chaîne de caractères de mot de passe, déterminer si un emplacement de chaque caractère dans la chaîne de caractères de déverrouillage est le même qu'un emplacement de chaque caractère dans la chaîne de caractères de mot de passe ou non ; et
si l'emplacement de chaque caractère dans la chaîne de caractères de déverrouillage est le même que l'emplacement de chaque caractère dans la chaîne de caractères de mot de passe, déterminer que la chaîne de caractères de déverrouillage correspond à la chaîne de caractères de mot de passe.

11. Terminal selon l'une quelconque des revendications 7 à 10, comprenant en outre une unité d'invite,
l'unité d'invite étant configurée pour: après que l'unité d'affichage a affiché de manière aléatoire la chaîne de caractères de texte sur l'écran de verrouillage du terminal, donner pour instruction à l'utilisateur de saisir la chaîne de caractères de déverrouillage en utilisant une voix.

12. Terminal selon l'une quelconque des revendications 9 à 11, le caractère de premier type appartenant au jeu de caractères prédéfini, et le caractère de second type n'appartenant pas au jeu de caractères prédéfini.
